# FASCICULE DE BREVET EUROPEEN

(11) **EP 2 702 649 B1**
(45) Date de publication et mention de la délivrance du brevet: **20.09.2017**
(21) Numéro de dépôt: 12722465.7
(22) Date de dépôt: 24.04.2012
(51) Int. Cl.: H01S 3/067, G02B 6/02, G02B 6/036

(54) **FIBRE OPTIQUE MONOMODE À TRIPLE GAINE**
DREIFACH UMHÜLLTE OPTISCHE EINMODENFASER
TRIPLE-SHEATHED MONOMODE OPTICAL FIBER

(30) Priorité: 26.04.2011 FR 1153550
(43) Date de publication de la demande: 05.03.2014
(73) Titulaire: Centre National de la Recherche Scientifique (C.N.R.S.), 75794 Paris Cedex 16 (FR); Université de Limoges, 87032 Limoges (FR)
(72) Inventeur: ROY, Philippe, F-87100 Limoges (FR); SCHUSTER, Kay, 07743 Jena (DE); GRIMM, Stephan, 07743 Jena (DE)
(74) Mandataire: Osha Liang
(86) Numéro de dépôt international: PCT/FR2012/050897
(87) Numéro de publication internationale: WO 2012/146866

(56) Documents cités:
- US-A1- 2009 052 476

## Description

La présente invention concerne une fibre optique active destinée à une émission lumineuse monomode.

Quoique non exclusivement, une telle fibre optique peut être utilisée dans des applications pour lesquelles il importe de transporter ou d'amplifier de fortes puissances optiques tout en minimisant l'impact des effets non-linéaires.

On connaît déjà des fibres optiques monomodes, dites à double gaine. Ces fibres sont composées d'un coeur en verre (par exemple en aluminosilicate) dopé par une terre rare (par exemple l'ytterbium), dédié à l'amplification monomode d'un faisceau lumineux initial. Ce coeur est directement entouré d'une gaine de pompage multimode (par exemple en silice), de plus grande dimension que le coeur, ce qui permet la propagation des différents modes d'une pompe multimode. Une gaine externe, faite en verre, en un polymère ou en alvéoles d'air, dont l'indice de réfraction est très inférieur à ceux du coeur et de la gaine de pompage multimode, entoure ladite gaine de pompage multimode.

Ce type de fibre optique monomode à double gaine permet de réaliser des faisceaux lasers de grande surface et de forte puissance. Il en résulte également une puissance de pompage (et donc une amplification monomode) plus élevée vis-à-vis d'un pompage monomode classique.

Afin d'améliorer l'efficacité d'amplification d'une fibre optique monomode du type précité, il importe d'améliorer le taux d'absorption, par le coeur monomode, de la lumière issue de la gaine de pompage multimode, ce qui dépend en outre du taux de dopage et du diamètre du coeur. Une telle amélioration doit toutefois être opérée en préservant le caractère monomode de la fibre (qui dépend en outre de la différence d'indice de réfraction entre le coeur monomode et la gaine de pompage multimode), l'efficacité quantique du matériau (qui dépend des co-dopages et de la matrice hôte), ainsi que les propriétés de guidage par ladite fibre.

Or, si l'on augmente le taux de dopage (par exemple en ytterbium) dans le coeur monomode en vue d'améliorer l'efficacité d'amplification de la fibre, il en résulte une augmentation de l'indice de réfraction du coeur (plus ou moins forte en fonction d'éventuels co-dopants), donc une augmentation de la différence d'indice de réfraction entre ledit coeur et la gaine de pompage multimode. Dès lors, pour compenser l'effet de cette augmentation et maintenir ainsi le caractère monomode du coeur, il est nécessaire de diminuer son diamètre, ce qui diminue de fait l'efficacité d'amplification de la fibre. Il s'ensuit que l'efficacité d'amplification de la fibre ne peut être améliorée par un choix adéquat du taux de dopage ou du diamètre du coeur.

Une première solution pour améliorer l'efficacité d'amplification consiste à diminuer l'effet du dopage du coeur monomode sur son indice de réfraction. A cette fin, l'ytterbium peut être associé à un autre dopant, tel que le fluor ou le bore, ce qui a pour effet, à taux de dopage égal, de diminuer l'indice de réfraction du coeur ainsi dopé par rapport à un coeur dopé à l'ytterbium et rend donc possible d'augmenter le taux de dopage du coeur sans devoir augmenter de façon significative la différence d'indice de réfraction entre le coeur et la gaine de pompage multimode.

Toutefois, en tant que co-dopants, le fluor et le bore ne permettent pas de compenser totalement l'augmentation de l'indice de réfraction engendré par de très forts dopages tels qu'un dopage en ytterbium. Il s'ensuit une dégradation de l'interaction lumière-matière dans le coeur, ce qui impose d'augmenter la longueur d'interaction lumière-matière, mais ceci engendre, d'une part, l'apparition d'effets non-linéaires, et, d'autre part, une perte de compacité de la source lumineuse (en particulier pour les fibres à coeur de grande dimension qui ne peuvent être courbées du fait d'une très faible différence d'indice de réfraction entre le coeur la gaine). De plus, pour de très forts dopages en ytterbium, il est plus difficile d'obtenir un profil d'indice de réfraction uniforme sur l'ensemble du coeur, ce qui peut compromettre l'obtention d'un bon niveau de maîtrise de la qualité du faisceau laser émis.

Une deuxième solution pour améliorer cette efficacité d'amplification consiste à utiliser des fibres optiques monomodes dites à triple gaine, comme décrites dans le document US 6,841,053, afin d'augmenter l'indice de réfraction de la gaine qui entoure directement le coeur monomode. Pour cela, une gaine intermédiaire est intercalée entre le coeur et la gaine de pompage multimode, de sorte que la fibre est ainsi formée, du centre vers sa périphérie :
- d'un coeur monomode dopé par une terre rare (par exemple en aluminosilicate dopé à l'ytterbium) ;
- d'une gaine intermédiaire (par exemple en silice dopée au germanium), optiquement inactive (non amplificatrice), dont l'indice de réfraction diffère faiblement de celui dudit coeur monomode (par exemple 10-³ ou moins) ;
- d'une gaine de pompage multimode (par exemple en silice) ; et
- d'une gaine externe (dont l'indice de réfraction est très inférieur à ceux du coeur, de la gaine intermédiaire et de la gaine de pompage multimode).

Cette architecture de fibre optique à triple gaine permet d'augmenter le taux de dopage en ytterbium (et donc le taux d'absorption par le coeur), sans recourir au fluor et au bore et tout en maintenant une différence d'indice de réfraction adéquate entre le coeur monomode et la gaine entourant directement ledit coeur. En effet, l'indice de réfraction de la gaine intermédiaire (par exemple en silice dopée au germanium) peut être ajusté par un choix adéquat du taux de dopage en germanium, de manière que la différence entre l'indice de réfraction du coeur et celui de la gaine intermédiaire soit maintenue aussi faible que possible, tout en augmentant par ailleurs le taux de dopage (et donc l'indice de réfraction) du coeur monomode.

Toutefois, dans le type de fibre optique monomode précité, le profil de l'indice de réfraction est un paramètre critique susceptible d'influer de façon néfaste sur ses propriétés d'amplification monomode. Or, dans le document US 6,841,053, le coeur et la gaine intermédiaire forment chacun une couche uniforme fabriquée par une technique dite MCVD (acronyme anglo-saxon de « Modified Chemical Vapour Deposition »). Il s'ensuit que, si on dope fortement le coeur afin d'améliorer les propriétés d'amplification de la fibre, le profil d'indice de réfraction dans la couche uniforme formant la gaine intermédiaire ne peut être parfaitement contrôlé, ce qui nécessite à nouveau, pour préserver le caractère monomode de la fibre, de limiter le diamètre du coeur (par exemple à 20 µm), donc également le taux d'amplification de la fibre.

Une autre solution peut consister à utiliser une fibre dite « rod-type », pour laquelle le caractère monomode dépend notamment des dimensions des trous d'air qui la constituent (des trous d'air de trop grands diamètres engendrant nécessairement une amplification multimode), mais, là encore, le contrôle de la dimension des trous d'air étant difficile, le contrôle de l'indice de réfraction de la gaine intermédiaire (et donc du caractère monomode de la fibre) est également difficile. De plus, dans ce type de fibre, l'indice de réfraction du coeur doit être exactement égal à celui de la silice pure et parfaitement homogène. Un mélange de matériaux, par exemple aluminosilicate dopé à l'ytterbium et silice dopée au fluor est alors utilisé et réalisé par assemblage-étirage à multiples étapes jusqu'à l'obtention d'une structuration submicronique perçue comme homogène par le rayonnement lumineux guidé. Cette technique complexe, d'une part, entraine alors des coûts élevés et, d'autre part, ne permet pas d'optimiser l'efficacité d'amplification de la fibre, puisqu'une partie importante du coeur n'est pas dopée à l'ytterbium et ne contribue pas à l'amplification optique.

Une autre solution peut consister à utiliser une fibre dite « leakage channels », pour laquelle le caractère monomode est obtenu de manière similaire, par très faible guidage entre un coeur similaire à celui des "rod-type" et une gaine présentant de grandes inclusions de silice bas indice.

Une autre solution peut consister à utiliser une fibre dite « chirally coupled core », pour laquelle le caractère monomode est obtenu en évacuant les modes d'ordre supérieur du coeur central multimode par couplage sélectif dans un coeur périphérique enroulé autour du coeur central. L'homogénéité du coeur est obtenu par étirages-assemblages multiples, mais peut ne pas requérir de silice non dopée à l'ytterbium. Le diamètre du coeur est cependant limité à moins de 40 µm par les difficultés techniques, du fait de l'évacuation sélective d'un très grand nombre de modes d'ordres supérieurs.

Document US2009/0052476 a pour objet une fibre optique permettant d'obtenir une puissance élevée en sortie de fibre et ayant un coeur dopé en terres rares, une gaine et une pluralité de trous d'air formés dans la gaine.

L'objet de la présente invention est donc de favoriser une forte amplification monomode (malgré un coeur de diamètre élevé et un fort taux de dopage), tout en maîtrisant de façon judicieuse le profil d'indice de réfraction dans la gaine intermédiaire.

A cette fin, selon l'invention, la fibre optique destinée à une émission lumineuse monomode comprenant, depuis son centre vers sa périphérie :
- un coeur monomode au moins partiellement dopé par une terre rare,
- une gaine intermédiaire, optiquement inactive,
- une gaine de pompage multimode, et
- une gaine externe,
est remarquable en ce que ladite gaine intermédiaire
- est formée par l'assemblage d'éléments longitudinaux solides, et
- comprend un premier matériau dont l'indice de réfraction diffère de l'indice de réfraction dudit coeur monomode par au plus 10⁻³, et un deuxième matériau dont l'indice de réfraction diffère de l'indice de réfraction dudit coeur monomode par au moins 10⁻³.

Ainsi, grâce à la présente invention, la gaine intermédiaire comprend un ensemble d'éléments longitudinaux solides, tels que des cannes ou des baguettes, et comporte une portion (première matière optique ; premier matériau) dont l'indice de réfraction est proche de celui du coeur et une portion (deuxième matière optique ; deuxième matériau) dont l'indice de réfraction est éloigné de celui du coeur.

La gaine intermédiaire est ainsi perçue par la lumière comme un matériau globalement hétérogène dont l'indice de réfraction effectif est proche de celui du coeur, ce qui assure que la différence d'indice de réfraction entre ledit coeur et ladite gaine intermédiaire peut être maintenue à une valeur faible, un tel profil d'indice pouvant être obtenu de manière précise en choisissant de façon adéquate les indices de réfraction, les proportions et la disposition desdites portions d'indices de réfraction différents de ladite gaine intermédiaire, ceci même si l'indice de réfraction du coeur (via son taux de dopage) est élevé. Le mode fondamental de propagation de la lumière peut donc être confiné dans le coeur, qui peut ainsi présenter un caractère monomode. Il s'ensuit ainsi que, par une maîtrise raisonnable de deux matières optiques distinctes, à une échelle macroscopique, le profil de l'indice de réfraction dans la gaine intermédiaire ainsi formée peut être maîtrisé de façon adéquate, à l'échelle microscopique.

De cette manière, il est possible de disposer d'un coeur dont le diamètre et le taux de dopage sont élevés, tout en assurant que la gaine intermédiaire présente un profil d'indice de réfraction apte à limiter la différence entre l'indice de réfraction dudit coeur et celui de ladite gaine. La fibre ainsi formée offre donc à la fois une amplification monomode accrue et des propriétés de guidage satisfaisantes.

En outre, grâce encore à la présente invention, la gaine intermédiaire est formée d'éléments longitudinaux solides (cannes, baguettes), qui présentent l'avantage d'être modulables et de pouvoir être conçus et assemblés de façon simple, ce qui facilite d'autant la fabrication de la fibre et limite par ailleurs son coût de fabrication.

Un autre avantage de l'invention est que le dopage (au moins partiel) du coeur de la fibre peut être réalisé avec une terre rare (telle que l'ytterbium), tout en garantissant l'obtention d'un profil d'indice de réfraction satisfaisant dans le coeur, même si cet indice de réfraction est élevé.

On notera en outre que, puisque l'invention autorise un taux de dopage plus élevé du coeur, celle-ci rend possible, à taux d'amplification monomode égal et à diamètre de coeur égal, la réalisation d'une fibre optique de longueur plus courte, ce qui permet de limiter l'impact des effets non-linéaires sur la lumière qui se propage dans la fibre ainsi formée, ainsi que d'améliorer la compacité des sources lumineuses utilisées.

Le profil d'indice de réfraction dans la gaine intermédiaire peut être contrôlé de façon particulièrement précise lorsque ladite gaine intermédiaire est uniquement constituée desdits éléments longitudinaux solides.

Afin d'assembler facilement les éléments longitudinaux solides dans la gaine intermédiaire, au moins certains d'entre eux peuvent être disposés dans ladite gaine intermédiaire suivant un arrangement matriciel.

Afin que les éléments longitudinaux solides de la gaine intermédiaire puissent être disposés côte-à-côte sans perte d'espace, au moins certains de ces éléments longitudinaux solides présentent avantageusement une section transversale de forme hexagonale, de manière à pouvoir former un arrangement matriciel sous forme de nids d'abeille. Cependant, d'autres formes de sections peuvent être utilisées, comme par exemple des formes circulaire ou carrée.

Dans la fibre optique conforme à la présente invention, bien que l'indice de réfraction de la première matière optique soit égal ou aussi proche que possible de l'indice de réfraction du coeur monomode, l'indice de réfraction effectif de ladite gaine intermédiaire peut être légèrement inférieur ou légèrement supérieur à l'indice de réfraction du coeur monomode du fait que l'indice de réfraction de la deuxième matière optique est soit très inférieur, soit très supérieur à l'indice de réfraction dudit coeur monomode.

La deuxième matière optique peut, à titre d'exemple, être de l'aluminosilicate ou de la silice dopés au lanthane, alors que la première matière optique peut également être de l'aluminosilicate ou de la silice, peu ou faiblement dopées. Bien entendu, ces exemples ne sont pas limitatifs, lesdites première et deuxième matières optiques pouvant être formées de tout autre matériau compatible et d'indice de réfraction adapté.

Dans la fibre optique monomode conforme à la présente invention, lesdites première et deuxième matières optiques peuvent être distribuées selon plusieurs modes différents.

Dans un premier mode, ladite fibre optique monomode comporte des éléments longitudinaux solides comprenant :
- une portion longitudinale centrale constituée de ladite première matière optique, et
- une portion longitudinale périphérique, qui entoure ladite portion longitudinale centrale, dont l'aire transversale est inférieure à l'aire transversale de cette dernière et qui est constituée de ladite deuxième matière optique.

Selon un deuxième mode, ladite fibre optique monomode comporte des premiers éléments longitudinaux solides constitués de ladite première matière optique et des deuxièmes éléments longitudinaux solides constitués de ladite deuxième matière optique.

En variante, la fibre optique monomode conforme à la présente invention peut comporter des premiers éléments longitudinaux solides constitués de ladite première matière optique et des deuxièmes éléments longitudinaux solides comprenant :
- une portion longitudinale centrale constituée de ladite première matière optique, et
- une portion longitudinale périphérique, qui entoure ladite portion longitudinale centrale, dont l'aire transversale est inférieure à l'aire transversale de cette dernière et qui est constituée de ladite deuxième matière optique.

La dimension transversale des éléments longitudinaux solides de la gaine intermédiaire peut être supérieure à la longueur d'onde d'émission monomode de la fibre optique monomode par un facteur par exemple au moins égal à 10. Dans ce cas, la gaine intermédiaire est perçue par la lumière comme un matériau globalement hétérogène et la lumière est confinée à l'intérieur du coeur par réflexions internes totales modifiées (« MTIR »).

En variante, la dimension transversale des éléments longitudinaux solides de la gaine intermédiaire peut être inférieure à la longueur d'onde d'émission monomode de la fibre optique monomode. Dans ce cas, la lumière perçoit la gaine intermédiaire comme un matériau globalement homogène dont l'indice de réfraction effectif est proche de celui du coeur et la lumière se propage à l'intérieur de la fibre par réflexions internes totales (« TIR »).

De préférence, le coeur monomode peut présenter un indice de réfraction transversalement homogène à l'échelle de la longueur d'onde d'émission monomode. Dans ce cas, aux fins d'un meilleur confinement et d'une amplification préférentielle du mode fondamental de propagation, le centre du coeur est dopé par une terre rare, tandis que sa périphérie n'est pas dopée.

Afin de favoriser la modularité de la fibre optique, le coeur et/ou la gaine de pompage multimode peuvent comporter des éléments longitudinaux solides.

La discrimination modale au niveau du coeur peut être améliorée en disposant des moyens de filtrage modal sur le coeur et/ou sur la gaine intermédiaire. Ces moyens de filtrage, complémentaires en termes de sélection par amplification préférentielle du mode recherché, peuvent se présenter sous la forme de pertes ciblées sur les modes de propagation d'ordres supérieurs et être formés par exemple par inscription de réseaux inclinés dans le coeur et/ou la gaine intermédiaire.

Afin d'assurer le confinement du seul mode fondamental dans le coeur, l'indice de réfraction effectif de la gaine intermédiaire peut différer de l'indice de réfraction du coeur monomode par au plus 10⁻⁴, pour des coeurs dont les dimensions peuvent approcher 100λ (quelques 10⁻⁴ pour des coeurs plus petits).

Pour fabriquer une fibre optique monomode selon l'une des formes de réalisation décrites ci-dessus, on peut mettre en oeuvre un procédé de fabrication, selon lequel, pour fabriquer la gaine intermédiaire :
- on dispose un ensemble de poudres dans des préformes correspondant à des éléments longitudinaux solides de ladite gaine intermédiaire,
- on vitrifie lesdites préformes,
- on adapte les dimensions desdites éléments longitudinaux solides par fibrage afin de former lesdits éléments longitudinaux solides,
- on agence lesdits éléments longitudinaux solides de manière à former ladite gaine intermédiaire, et
- on établit le vide entre lesdits éléments longitudinaux solides (ce qui permet d'obtenir une structure entièrement solide, c'est-à-dire sans air).

Ce procédé, fondé sur le principe de la vitrification de poudres, offre un contrôle particulièrement efficace de l'indice de réfraction des matériaux formant la gaine intermédiaire, ce qui rend possible la réalisation de structures partiellement dopées à profil d'indice complexe, tout en permettant l'émission d'un faisceau lumineux monomode malgré un coeur susceptible d'être de grande taille et d'indice de réfraction élevé. Les volumes fabriqués (qui représentent 15 à 100 fois le volume synthétisé suivant la méthode MCVD) permettent de simplifier le procédé de fabrication, dans la mesure où ce procédé permet d'obtenir une préforme directement exploitable remplaçant plusieurs préformes MCVD qu'il était nécessaire de rectifier mécaniquement ou chimiquement pour obtenir les éléments longitudinaux solides à assembler.

De plus, le vide étant établi, ce procédé de fabrication de la fibre permet de disposer d'une fibre optique entièrement solide, sans ou avec peu de trous d'air, ce qui facilite le raccordement de ladite fibre à des composants fibrés ainsi que l'assemblage de sources fiables.

Un autre avantage de ce procédé est qu'il engendre une faible quantité de fibres inexploitables, ce qui a pour effet de réduire de façon significative le coût de fabrication d'une fibre optique monomode selon l'invention, par rapport à d'autres procédés bien connus de l'homme du métier pour fabriquer une fibre optique monomode à triple gaine.

De préférence, pour fabriquer le coeur monomode :
- on dispose une poudre dans des préformes correspondant respectivement à des éléments longitudinaux solides du coeur monomode,
- on vitrifie lesdites préformes,
- on adapte les dimensions desdites préformes par fibrage afin de former lesdits éléments longitudinaux solides,
- on agence lesdits éléments longitudinaux solides de manière à former ledit coeur monomode, et
- on établit le vide entre lesdits éléments longitudinaux solides.

La préforme permettant de fabriquer la fibre optique selon la présente invention est de préférence constituée d'un agencement judicieux d'éléments longitudinaux solides de manière à former le coeur et la gaine intermédiaire. Le vide peut donc être établi, de préférence, lors d'une étape étirage de la préforme, ce qui permet d'obtenir la fibre selon la présente invention.

Les figures du dessin annexé feront bien comprendre comment l'invention peut être réalisée. Sur ces figures, des références identiques désignent des éléments techniques semblables.
La figure 1A est une vue en coupe schématique d'une fibre optique monomode à triple gaine conforme à l'art antérieur.
La figure 1B est un schéma illustrant la répartition transversale de l'indice de réfraction dans la fibre optique de la figure 1A.
La figure 2A est une vue en coupe schématique d'un premier exemple de fibre optique monomode à triple gaine conforme à la présente invention.
La figure 2B est un schéma illustrant la répartition transversale de l'indice de réfraction dans la fibre optique de la figure 2A.
La figure 3A est une vue en coupe schématique de l'un des éléments longitudinaux solides dont l'assemblage forme la structure partiellement dopée de la gaine intermédiaire de la fibre optique de la figure 2A.
La figure 3B est un schéma illustrant la répartition transversale de l'indice de réfraction dans l'élément longitudinal représenté à la figure 3A.
La figure 4 est une vue en coupe schématique d'une variante de la fibre optique monomode à triple gaine de la figure 2A
Les schémas A, B, C et D de la figure 5 illustrent des étapes successives du procédé de fabrication d'éléments longitudinaux solides des fibres optiques monomodes des figures 2A et 4.
La figure 6A est une vue en coupe schématique d'un second exemple de fibre optique monomode à triple gaine conforme à la présente invention.
La figure 6B est un schéma illustrant une répartition diamétrale, selon le diamètre X-X' de la figure 6A, de l'indice de réfraction dans la fibre optique de la figure 6A.

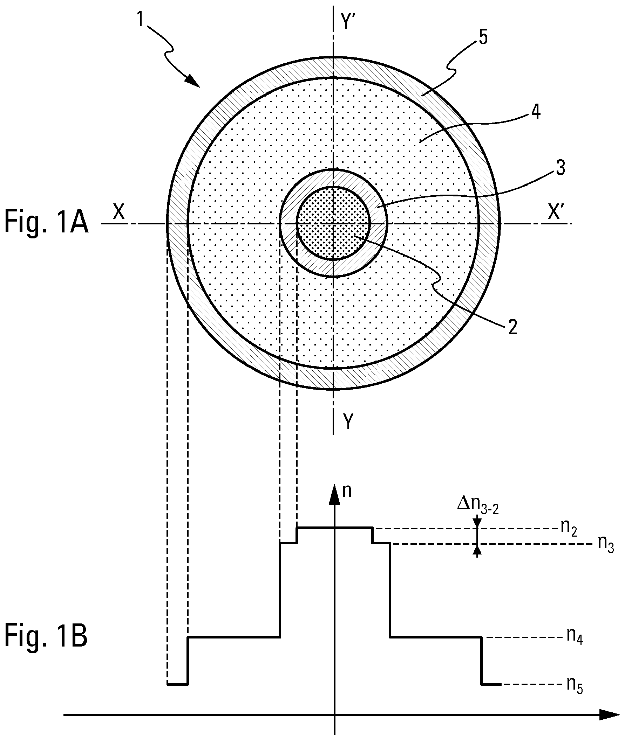

Une fibre optique monomode à triple gaine 1 conforme à l'art antérieur, prévue pour émettre un rayonnement lumineux à une longueur d'onde par exemple située entre 1030 et 1100 nm (longueur d'onde typique pour l'ion ytterbium, mais qui peut être transposée à 1,5 µm ou 2 µm ou toute autre longueur d'onde) et dont une section transversale dans un plan (X-X' ; Y-Y') est représentée sur la figure 1A et comporte, depuis son centre vers sa périphérie :
- un coeur monomode 2 au moins partiellement dopé par une terre rare ;
- une gaine intermédiaire 3, optiquement inactive mais qui contribue à conférer au coeur son caractère monomode;
- une gaine de pompage multimode 4; et
- une gaine externe 5.

Le coeur 2 présente un indice de réfraction n₂ (figure 1B) et une dimension limitée à environ 25-30 µm. Il peut être formé en silice ou en aluminosilicate et dopé par une terre rare telle que l'ytterbium (ou l'erbium ou encore le thulium), ou en tout matériau présentant l'avantage de faciliter l'obtention d'un profil d'indice de réfraction uniforme. Il pourra cependant être inactif dans une certaine zone afin de permettre l'amplification préférentielle d'un unique mode (par exemple le mode fondamental). Le diamètre du coeur est en général limité à 25-30 µm par la précision sur les indices de réfraction des différents matériaux que permettent de garantir les techniques de fabrication usuelles (MCVD par exemple).

La gaine intermédiaire 3 entoure le coeur 2. Cette gaine 3, d'indice de réfraction n₃ (figure 1B) inférieur à l'indice de réfraction n₂ du coeur 2, peut être par exemple formée en silice (ou en aluminosilicate) et dopée au germanium.

L'indice de réfraction n₃ de la gaine 3 doit être déterminé de manière que la différence Δn₃₋₂ entre l'indice de réfraction n₂ du coeur 2 et celui n₃ de ladite gaine 3 soit aussi faible que possible, par exemple 10⁻³, limite généralement admise par l'homme du métier, ce qui permet d'obtenir une propagation monomode de la lumière dans le coeur 2 suivant un ensemble de réflexions internes totales (technique dite « TIR »).

La gaine de pompage multimode 4 entoure la gaine intermédiaire 3 (figure 1A). Cette gaine 4 présente un indice de réfraction n₄ inférieur ou égal aux indices de réfraction n₂ (du coeur 2) et n₃ (de la gaine 3) et une dimension adaptée par rapport à celles dudit coeur 2 et de ladite gaine intermédiaire 3, afin de permettre la propagation des différents modes d'une pompe multimode. Elle peut, à cette fin et pour simplifier la fabrication, être formée en silice non dopée (par une terre rare) ou en aluminosilicate non dopé (par une terre rare). La forme de la gaine de pompage multimode 4 n'est pas nécessairement circulaire afin d'améliorer l'absorption de la puissance de pompage, conformément à des techniques bien connues de l'homme du métier.

La gaine externe 5 entoure la gaine de pompage multimode 4. Cette gaine 5, d'indice de réfraction n₅ (figure 1B) inférieur (et préférentiellement très inférieur) aux indices n₂, n₃ et n₄, permet à la fois de protéger l'intérieur de la fibre 1, et de guider le rayonnement de pompage. Elle peut être constituée d'alvéoles d'air ou bien formée en un matériau adapté aux températures élevées (polymère, revêtement fluoré, etc.). On notera que l'indice de réfraction n₅ de cette gaine 5 doit être faible, et différer suffisamment des indices de réfraction du coeur 2 et des gaines 3 et 4.

On notera que le coeur 2 n'est pas nécessairement situé au centre de la fibre optique 1, ni entouré par la gaine intermédiaire de manière concentrique. De même, la forme du coeur et des différentes gaines n'est pas nécessairement circulaire.

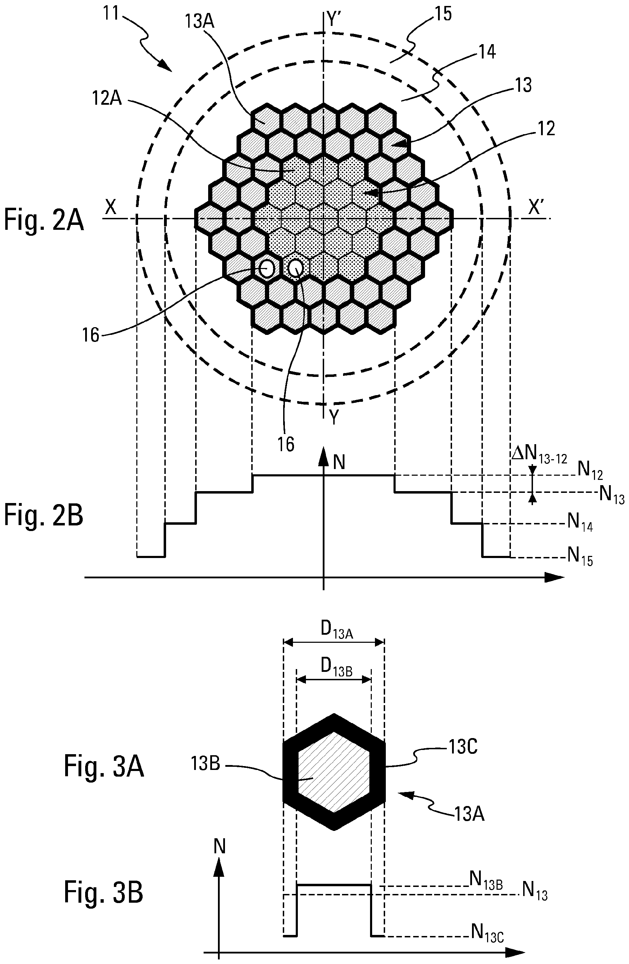

Afin d'améliorer l'amplification monomode de la fibre optique à triple gaine des figures 1A et 1B, tout en améliorant ses propriétés de guidage optique, l'invention concerne une architecture particulière de gaine intermédiaire, dont un premier exemple est illustré par les figures 2A, 2B, 3A et 3B.

La fibre optique monomode à triple gaine 11 conforme à la présente invention, qui est prévue par exemple pour émettre un rayonnement lumineux à une longueur d'onde de 1030 nm et dont une section transversale dans un plan (X-X' ; Y-Y') est représentée sur la figure 2A, comporte, depuis son centre vers sa périphérie :
- un coeur monomode 12, semblable au coeur 2 et d'indice de réfraction N₁₂ ;
- une gaine intermédiaire 13, optiquement inactive (comme la gaine intermédiaire 3) et d'indice de réfraction effectif N₁₃ ;
- une gaine de pompage multimode 14, semblable à la gaine de pompage 4 et d'indice de réfraction N₁₄ ; et
- une gaine externe 15 semblable à la gaine 5 et d'indice de réfraction N₁₅.

La gaine intermédiaire 13 représentée sur la figure 2A comporte une pluralité d'éléments longitudinaux solides 13A, tels que des cannes ou des baguettes agencés de façon à former plusieurs couches coaxiales (deux sur la figure 2A) entourant le coeur 12.

Ces éléments longitudinaux solides 13A, préférentiellement tous identiques (mais pas nécessairement), sont disposés de façon adjacente de manière à couvrir l'ensemble de l'étendue longitudinale et transversale de la fibre 11. Ils présentent chacun une section de forme hexagonale dont les côtés sont en contact avec ceux des éléments longitudinaux solides limitrophes. Toutefois, toute autre forme de section peut être adoptée, en particulier une forme circulaire, rectangulaire ou triangulaire, dans la mesure où celle-ci n'engendre pas, entre les éléments longitudinaux solides adjacents, des trous d'air dont l'étendue transversale serait trop importante.

Comme représenté plus en détail sur la figure 3A, un élément longitudinal 13A de la gaine intermédiaire 13 comporte deux portions coaxialement adjacentes, à savoir une première portion longitudinale 13B (centrale) entourée par une deuxième portion longitudinale 13C (périphérique). Dans les éléments longitudinaux solides 13A de la gaine intermédiaire 13, la portion longitudinale périphérique 13C est constituée d'une matière optique dont l'indice de réfraction diffère de l'indice de réfraction du coeur monomode 12 par au moins 10⁻³ et la portion longitudinale centrale 13B est constituée d'une matière optique dont l'indice de réfraction diffère de l'indice de réfraction dudit coeur monomode par au plus 10⁻³. Par exemple, dans l'élément longitudinal 13A de la figure 3A, la première portion longitudinale 13B est en une matière optique telle que, par exemple, de la silice dopée au lanthane ou de l'aluminosilicate dopé au lanthane et présente un indice de réfraction N_{13B} supérieur à celui N_{13C} de la deuxième portion longitudinale 13C réalisée en une matière optique telle que, par exemple, de la silice ou de l'aluminosilicate non dopés ou faiblement dopés (en terme d'indice de réfraction). De cette manière, l'indice de réfraction N_{13C} de la deuxième portion longitudinale 13C, déterminé de manière à être significativement différent de celui N₁₂ du coeur 12 (par exemple inférieur à l'indice de réfraction du coeur d'au moins 5.10⁻³), permet d'assurer le guidage de la lumière dans ledit coeur 12.

De plus, l'aire transversale de la première portion longitudinale 13B est supérieure à celle de la deuxième portion longitudinale 13C, ce qui permet d'obtenir un indice de réfraction effectif N₁₃ de la gaine intermédiaire 13 qui est sensiblement proche (et préférentiellement inférieur pour un guidage de type TIR ou MTIR) de celui N₁₂ du coeur 12.

La fibre optique monomode 11 ainsi formée d'une telle gaine intermédiaire 13 est donc apte à guider un rayonnement lumineux à une longueur d'onde d'émission monomode prédéterminée et à amplifier efficacement ce rayonnement. L'homme du métier connaît ce mode de guidage sous le nom de réflexions totales internes modifiées ou « MTIR » (pour « Modified Total Internal Reflection » en langue anglo-saxonne).

Bien que la structure soit ici entièrement solide, le principe de guidage est semblable à celui qui s'opère dans des fibres microstructurées à trous d'air dites « PCF » ou encore dans des fibres dites « rod-type ».

On notera qu'une variante possible consiste à avoir un matériau 13C d'indice N_{13C} très supérieur à tous les autres indices de la structure (par exemple supérieur à l'indice de réfraction du coeur 12 d'au moins 10⁻²). La fibre optique 1 conserve alors les avantages mentionnés ci-dessus, mais le guidage de la lumière dans ladite fibre s'opère alors par bande interdite photonique (technique dite « BIP »), ce qui apporte de surcroît une meilleure résistance aux pertes par courbure.

On notera également qu'il est possible de choisir la dimension transversale de la deuxième portion longitudinale 13C de manière que celle-ci soit inférieure à la longueur d'onde d'émission monomode. Dans ce cas, la lumière se propage dans la fibre par réflexions totales internes ou « TIR » (pour « Total Internal Reflection » en langue anglo-saxonne) puisque le matériau structuré est perçu comme homogène par le rayonnement lumineux de longueur d'onde supérieure à la taille du motif.

L'agencement d'une portion longitudinale centrale 13B et d'une portion longitudinale périphérique 13C dans un élément longitudinal 13A permet une répartition transversale hétérogène (suivant une coupe transversale de la gaine 13) de l'indice de réfraction. Toutefois, tout autre type d'agencement pourrait être mis en oeuvre, en particulier un agencement à plus de deux portions d'indices de réfraction différents. A ce titre, il importe seulement que la répartition transversale de l'indice de réfraction dans la gaine 13 soit telle que, d'une part, la différence ΔN₁₃₋₁₂ entre l'indice de réfraction N₁₂ du coeur 12 et l'indice de réfraction effectif N₁₃ de la gaine 13 soit au plus égal à 10⁻³ (de préférence 10⁻⁴), et, d'autre part, que les portions longitudinales (ici les portions 13B) des éléments longitudinaux solides 13A pour lesquelles l'indice de réfraction est le plus faible (ici l'indice N_{13C}) aient des dimensions adaptées pour permettre un confinement par « TIR » ou « MTIR » dans la fibre optique 11.

Afin que la gaine intermédiaire 13 présente les caractéristiques mentionnées ci-dessus, l'homme du métier saura ajuster de façon adéquate les paramètres suivants (donnés à titre non exhaustif) :
- le nombre d'anneaux formés d'éléments longitudinaux solides 13A ;
- les taux de dopage des portions longitudinales 13B et 13C de chaque élément longitudinal 13A, qui déterminent leurs indices de réfraction respectifs ;
- le rapport des aires desdites portions 13B et 13C de chaque élément longitudinal 13A (ou encore le rapport des dimensions D_{13B} et D_{13A}, en référence à la figure 3B), qui détermine l'indice de réfraction effectif de la gaine 13 ; et
- la dimension des éléments longitudinaux solides.

La gaine intermédiaire 13 étant ainsi formée d'éléments longitudinaux solides 13A aptes à être assemblés les uns aux autres, ladite gaine 13 est modulaire et peut être formée à partir d'un ensemble d'éléments longitudinaux solides - non nécessairement tous identiques - judicieusement choisis. En particulier, en fonction des applications envisagées, il pourrait être opportun d'assembler, dans une même gaine 13, des éléments longitudinaux solides dont les sections ont des formes différentes et dont les portions constitutives ont des dimensions différentes et/ou sont formées en des matériaux différents et/ou sont dopées à des taux différents, dans la mesure où ces portions présentent des indices de réfraction adéquats. Toutefois, aux fins d'une meilleure homogénéité par symétrie de révolution autour de la gaine 13, il pourra être préféré de prévoir que les couches concentriques de la gaine 13 soient formées d'éléments longitudinaux solides tous identiques. Par ailleurs, un agencement d'éléments non identiques ou un agencement non symétrique peut permettre par exemple de réaliser une fibre à maintien de polarisation ou une fibre polarisante.

On notera que, pour les mêmes raisons de modularité de la fibre, le coeur 12 représenté sur la figure 2A (par exemple formé d'aluminosilicate dopé à l'ytterbium) est également formé d'éléments longitudinaux solides 12A, dont la section transversale présente la même forme et la même dimension que la section transversale des éléments longitudinaux solides 13A formant la gaine intermédiaire 13. Ces éléments longitudinaux solides 12A peuvent être chacun formés en une seule matière optique, par exemple constituée de silice ou d'aluminosilicate dopé à l'ytterbium.

On notera également que, toujours aux fins d'une plus grande modularité, la gaine de pompage multimode 14 - voire la gaine externe 15 - peut également être formée d'un ensemble d'éléments longitudinaux solides dont la section présente la même forme et la même dimension que celle des éléments longitudinaux solides 13A.

Par ailleurs, toujours en référence à la figure 2A, afin d'améliorer la discrimination modale et donc de favoriser la propagation du mode fondamental seulement dans le coeur 12, des pertes 16 peuvent être disposées respectivement au niveau de certains éléments longitudinaux solides 12A et 13A du coeur 12 et de la gaine intermédiaire 13. Ces pertes 16, ciblées sur les modes de propagation d'ordres supérieurs, permettent de filtrer ces derniers. Pour les disposer, il peut être recouru par exemple à une technique d'inscription de réseaux inclinés, bien connue de l'homme du métier.

A ce titre, l'homme du métier saura déterminer, pour une configuration de coeur 12 et de gaine intermédiaire 13 déterminée, les positions et dimensions optimales de ces pertes afin de filtrer de façon adéquate les modes d'ordres supérieurs.

Sur les figures 2A et 3A, on n'a représenté qu'une section transversale de la fibre optique 11, mais il va de soi que cette section peut être la même sur l'ensemble de l'étendue longitudinale de ladite fibre 11.

De même, bien que la description ci-dessus concerne une gaine intermédiaire 13 intégralement constituée d'éléments longitudinaux solides 13A, il va de soi que ladite gaine intermédiaire 13 peut n'être que partiellement formée de tels éléments, le reste de la gaine pouvant être formé d'un seul élément longitudinal présentant un unique indice de réfraction.

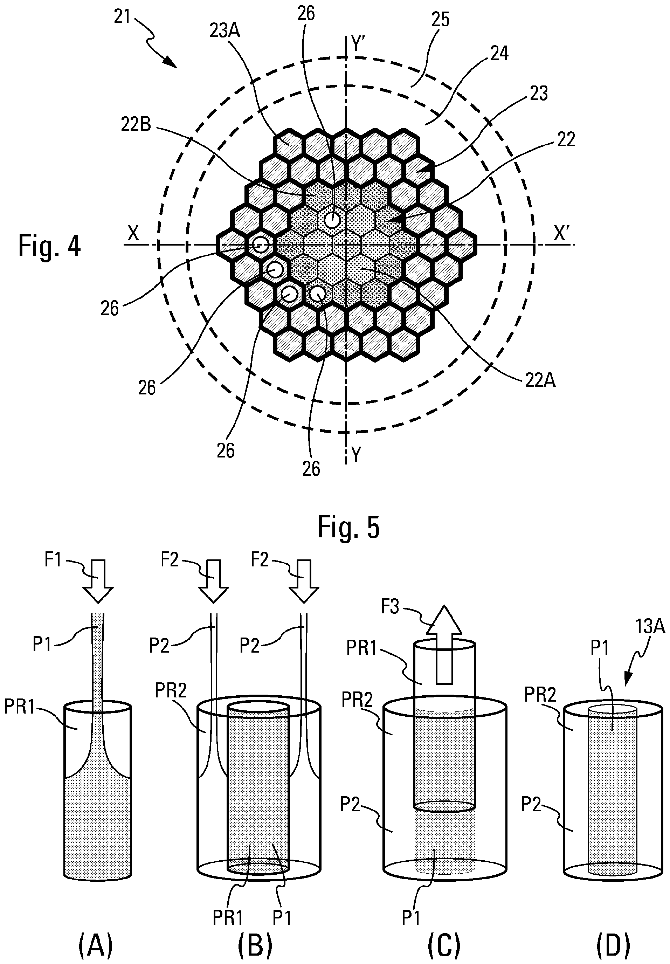

La figure 4 montre une variante de réalisation 21 de la fibre optique monomode à triple gaine décrite ci-dessus. Cette fibre optique 21 est semblable à la fibre optique 11 de la figure 2A, en particulier la gaine intermédiaire 23, la gaine de pompage multimode 24 et la gaine externe 25 correspondent respectivement aux gaines 13, 14 et 15 de la fibre optique 11. De même, les éléments longitudinaux solides 23A correspondent aux éléments 13A.

Le coeur 22 de cette fibre optique 21 diffère du coeur 12 en ce qu'il est partiellement dopé et comprend, par exemple en son centre, un ensemble d'éléments longitudinaux solides 22A dopés (par exemple formés d'aluminosilicate dopé à l'ytterbium), semblables aux éléments longitudinaux solides 12A de la fibre optique 11, et, à sa périphérie, des éléments longitudinaux solides 22B dont la section présente la même forme et la même dimension que celle des éléments longitudinaux solides 22A (et aussi des éléments longitudinaux solides 23A), ainsi que le même indice de réfraction que celui des éléments longitudinaux solides 22A, ces éléments 22B n'étant pas dopés activement (par exemple formés d'aluminosilicate dopé au lanthane ou au germanium, mais ne contenant pas d'ytterbium ou d'autre terre rare optiquement actif).

Dans ce cas, de façon analogue au premier exemple de réalisation de la figure 2A, des pertes 26 (semblables aux pertes 16) peuvent être introduites au niveau de certains éléments parmi les éléments longitudinaux solides 22A, 22B et 23A.

Afin de fabriquer une fibre optique monomode 11 (ou 21) conforme à la présente invention, il peut être recouru au procédé de fabrication illustré par les schémas A à D de la figure 5. Selon ce procédé, chaque élément longitudinal 13A (ainsi que 12A et 12B) peut être formé par vitrification de poudres, conformément aux étapes suivantes :
- une première poudre P1 (destinée à former la portion longitudinale centrale 13B) est disposée à l'intérieur d'un premier tube (servant de préforme) PR1 (schéma A de la figure 5) ;
- cette première préforme PR1 est insérée dans un second tube (servant de préforme) PR2 de plus grande dimension, puis une seconde poudre P2 (destinée à former la portion longitudinale périphérique 13C) est disposée à l'intérieur de ce seconde tube PR2, dans l'espace laissé libre par ledit premier tube PR1 (schéma B de la figure 5) ;
- une fois les deux poudres P1 et P2 disposées à l'intérieur du second tube PR2, le premier tube PR1 est retiré (schéma C de la figure 5) ;
- enfin, les poudres P1 et P2 sont vitrifiées à l'intérieur du second tube P2 pour former respectivement les portions longitudinales centrale 13B et périphérique 13C de l'élément longitudinal 13A (schéma D de la figure 5), le second tube 32 pouvant alors éventuellement être retiré par abrasion mécanique ou chimique.

Les schémas A à D de la figure 5 illustrent un exemple de fabrication d'un élément longitudinal de forme cylindrique, mais il va de soi que ce procédé peut être adapté à un élément longitudinal dont la section est de forme hexagonale ou autre.

De manière alternative, chaque élément longitudinal 13A (ainsi que 12A et 12B) peut être réalisé par vitrification de poudre et éventuellement dépôt externe de matière selon les étapes suivantes :
- une première poudre (destinée à former la portion longitudinale centrale 13B ou 12A) est disposée à l'intérieur d'un premier tube de préforme ;
- cette préforme est vitrifiée ;
- la préforme peut alors être abrasée afin d'ajuster l'épaisseur de la portion 13C ou totalement retirée pour obtenir un matériau homogène sur toute la section comme pour former un élément 12A par exemple ;
- dans le cas ou toute la matière périphérique est retirée mais qu'une section périphérique 13C est utile, un dépôt externe par OVD ou POVD par exemple peut être réalisé afin de constituer une portion 13C d'indice de réfraction souhaité.

Par la suite, les éléments longitudinaux solides 13A ainsi vitrifiés sont agencés de manière à former la gaine intermédiaire 13, puis le vide est établi entre ces éléments 13A pour les assembler et ainsi former ladite gaine intermédiaire 3.

Ce procédé peut être appliqué pour former les éléments longitudinaux solides 12A, 22A et 22B du coeur 12 ou 22, ainsi qu'éventuellement les éléments longitudinaux solides destinés à former la gaine de pompage multimode 14 - voire la gaine externe 15. Dans ce cas, si l'élément considéré est formé d'une seule portion présentant un unique indice de réfraction, il n'est nécessaire d'utiliser qu'une seule préforme et une seule poudre. Il en va de même des éléments longitudinaux solides 22A, 22B et 23A de la fibre optique 21 représentée sur la figure 4.

Ce procédé de vitrification, appliqué aux éléments longitudinaux solides de la fibre optique monomode 11 (ou 21) selon l'invention, permet notamment :
- de contrôler efficacement l'indice de réfraction des matériaux formant le coeur et la gaine intermédiaire 13 (ou 23) (et donc de maximiser l'aire effective et de minimiser l'impact des effets non-linéaires) ;
- de contrôler efficacement les niveaux de dopage (donc le gain et la longueur de fibre utile) afin de minimiser l'impact des effets non-linéaires ;
- de synthétiser des volumes beaucoup plus importants que par les méthodes CVD et par conséquent de considérablement simplifier le procédé de fabrication de la fibre et ainsi de réduire son coût ;
- de disposer d'une fibre optique entièrement solide, ce qui facilite le raccordement de la fibre à des composants fibrés, ainsi que l'assemblage de sources fiables ; et
- d'engendrer une faible quantité de fibres inexploitables, ce qui réduit de façon significative le coût de fabrication d'une fibre optique monomode.

D'autres procédés de fabrication pourraient être mis en oeuvre pour réaliser et assembler entre eux les éléments longitudinaux solides. A titre d'exemple, une portion longitudinale périphérique 13C (ou 23C) pourrait être disposée autour d'une portion longitudinale centrale 13B (ou 23B) par dépôt externe (oxydation en phase vapeur externe ou « OVD », oxydation en phase vapeur externe assistée plasma ou « POVD », etc.) ou en glissant la portion longitudinale périphérique 13C (ou 23C) dans un tube fin contenant la portion longitudinale centrale 13B (ou 23B). Par la suite, les éléments longitudinaux solides peuvent être soumis à une succession d'étapes d'assemblage-étirage, les trous interstitiels entre les éléments longitudinaux solides étant ensuite refermés grâce aux tensions superficielles et, si besoin, à une légère dépression. A cet égard, une structure en nid d'abeille, à éléments longitudinaux solides de section hexagonale, permet un confinement du mode fondamental par réflexions totales internes.

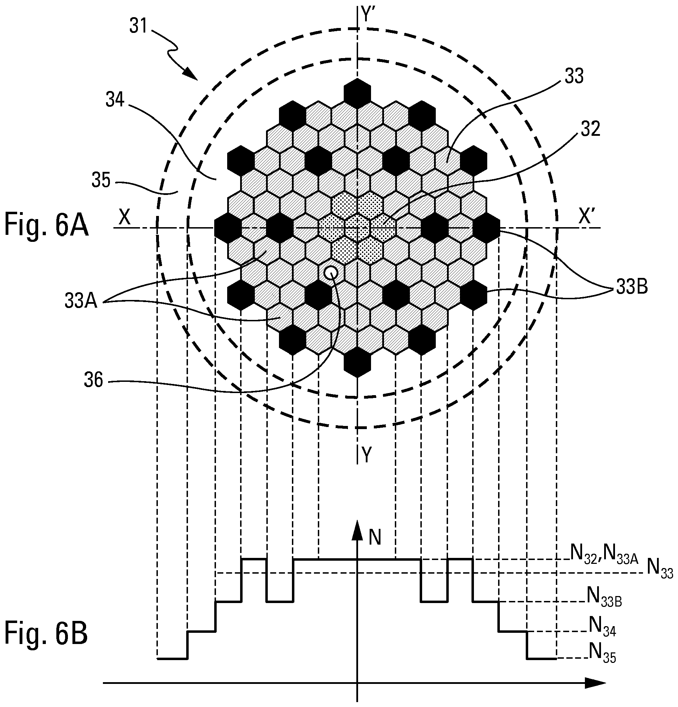

Sur les figures 6A et 6B, on a illustré un autre exemple de réalisation de la fibre optique monomode conforme à la présente invention.

La fibre optique monomode 31, conforme à la présente invention et illustrée par les figures 6A et 6B comporte, depuis son centre vers sa périphérie :
- un coeur monomode 32, semblable au coeur 12 de la fibre 11, et présentant un indice de réfraction N₃₂ ;
- une gaine intermédiaire 33, qui est constituée d'éléments longitudinaux solides 33A et 33B et qui est optiquement inactive, mais qui contribue à conférer au coeur son caractère monomode ;
- une gaine de pompage multimode 34, semblable à la gaine de pompage 14 de la fibre 11, et présentant un indice de réfraction N₃₄ ;
- une gaine externe 35, semblable à la gaine externe 15 de la fibre 11 et présentant un indice de réfraction N₃₅.

Comme la gaine intermédiaire 13 de la fibre 11, la gaine intermédiaire 33 comprend deux matières optiques dont la première présente un indice de réfraction différent de l'indice de réfraction du coeur monomode 32 par au plus 10⁻³ et dont la deuxième présente un indice de réfraction qui diffère de l'indice de réfraction dudit coeur monomode 32 par au moins 10⁻³.

Toutefois, dans la fibre monomode 31, ces deux matières optiques, au lieu d'être présentes en commun dans les éléments longitudinaux solides de la gaine intermédiaire (comme cela est le cas pour les éléments longitudinaux solides 13A de la gaine intermédiaire 13), forment respectivement la matière constitutive homogène des éléments longitudinaux solides distincts 33A et 33B : les éléments longitudinaux solides 33A sont (tout comme les portions centrales 13B des éléments longitudinaux solides 13A) constitués de ladite première matière optique, alors que les éléments longitudinaux solides 33B sont (tout comme les portions périphériques 13C des éléments longitudinaux solides 13A) constitués de ladite deuxième matière optique.

Dans l'exemple de distribution d'indice de réfraction représenté sur la figure 6B, l'indice N_{33A} de la première matière optique est aussi proche que possible de l'indice de réfraction N₃₂ du coeur monomode 32. Dans cet exemple, on a supposé que l'indice N_{33B} de la seconde matière optique était inférieur à l'indice de réfraction N₃₂ du coeur monomode 32. Il en résulte un indice effectif ou moyen N₃₃ de la gaine 33 qui est légèrement inférieur à l'indice de réfraction N₃₂ du coeur monomode 32. Toutefois, comme cela a été expliqué à propos de la fibre monomode 11, cet indice N_{33B} de la seconde matière optique pourrait être supérieur audit indice de réfraction N₃₂ du coeur monomode.

On remarquera que la fibre optique monomode 31 de la figure 6A peut comporter des pertes 36 et présente une structure particulièrement simple à réaliser, par exemple par la mise en oeuvre du procédé décrit ci-dessus. Son coût de fabrication est donc particulièrement faible.

Bien que cela n'ait pas été représenté sur les dessins, on comprendra aisément que la fibre optique monomode conforme à la présente invention peut comporter des premiers éléments longitudinaux solides, identiques aux éléments 33A, constitués de ladite première matière optique et des deuxièmes éléments longitudinaux solides, identiques aux éléments 13A et comprenant :
- une portion longitudinale centrale 13B constituée de ladite première matière optique, et
- une portion longitudinale périphérique 13C, qui entoure ladite portion longitudinale centrale 13B, dont l'aire transversale est inférieur à l'aire transversale de cette dernière et qui est constituée de ladite deuxième matière optique.

Quel que soit son mode de réalisation, la fibre optique monomode conforme à la présente invention présente les mêmes propriétés optiques, ainsi que de nombreux avantages telle que structure entièrement solide, fort dopage du coeur et excellente gestion des modes d'ordres supérieurs.

La fibre optique monomode selon la présente invention peut être utilisée de façon avantageuse, quoique non exclusivement, dans des applications telles que :
- l'usinage micrométrique ou nanométrique ;
- la génération de sources laser, par exemple dans le domaine infrarouge ;
- la génération de peigne de fréquence, de sources mono-fréquences, etc. ;
- des dispositifs de type LIDAR pour la mesure de vents, de vortex, etc. ;
- le pompage pour d'autres sources, par exemple à base de fibre « en verre mou », OPO;
- la médecine (bistouri laser, ophtalmologie, etc.) ;
- la détection de polluants ;
- la réalisation d'armes laser;
- la communication inter-satellites ; ou encore
- toute autre application susceptible de nécessiter le transport ou l'amplification d'un rayonnement lumineux monomode.

## Revendications

1. Fibre optique destinée à une émission lumineuse monomode (11, 21, 31) comprenant, depuis son centre vers sa périphérie :
- un coeur monomode (12, 22, 32) au moins partiellement dopé par une terre rare,
- une gaine intermédiaire (13, 23, 33), optiquement inactive,
- une gaine de pompage multimode (14, 24, 34), et
- une gaine externe (15, 25, 35),
**caractérisée en ce que** la gaine intermédiaire (13, 23, 33) est entièrement solide et est formée par l'assemblage d'éléments longitudinaux solides (13A, 23A, 33A et 33B), et comprend un premier matériau dont l'indice de réfraction diffère de l'indice de réfraction dudit coeur monomode par au plus 10⁻³, et un deuxième matériau dont l'indice de réfraction diffère de l'indice de réfraction dudit coeur monomode par au moins 10⁻³_{.}

2. Fibre optique selon la revendication 1, **caractérisée en ce que** ledit assemblage comporte des éléments longitudinaux solides (13A) comprenant :
- une portion longitudinale centrale (13B) constituée dudit premier matériau, et
- une portion longitudinale périphérique (13C), qui entoure ladite portion longitudinale centrale (13B), dont l'aire transversale est inférieure à l'aire transversale de cette dernière et qui est constituée dudit deuxième matériau.

3. Fibre optique selon la revendication 1, **caractérisée en ce que** ledit assemblage comporte des premiers éléments longitudinaux solides (33A) constitués dudit premier matériau et des deuxièmes éléments longitudinaux solides (33B) constitués dudit deuxième matériau.

4. Fibre optique selon la revendication 1, **caractérisée en ce que** ledit assemblage comporte des premiers éléments longitudinaux solides (33A) constitués dudit premier matériau et des deuxièmes éléments longitudinaux solides (13A) comprenant :
- une portion longitudinale centrale (13B) constituée dudit premier matériau, et
- une portion longitudinale périphérique (13C), qui entoure ladite portion longitudinale centrale (13B), dont l'aire transversale est inférieure à l'aire transversale de cette dernière et qui est constituée dudit deuxième matériau.

5. Fibre optique selon l'une des revendications 1 à 4, **caractérisée en ce que** l'indice de réfraction (N_{13B}, N_{33A}) dudit premier matériau est égal à l'indice de réfraction (N₁₂, N₃₂) dudit coeur monomode (12, 32), et l'indice de réfraction effectif de la gaine intermédiaire (13, 23, 33) est inférieur à l'indice de réfraction (N₁₂, N₃₂) du coeur monomode (12, 22, 32), du fait que l'indice de réfraction dudit deuxième matériau (N₁₃₆, N₃₃₈) est inférieur à l'indice de réfraction (N₁₂, N₃₂) dudit coeur monomode.

6. Fibre optique selon l'une des revendications 1 à 4, **caractérisée en ce que** l'indice de réfraction (N_{13B}, N_{33A}) dudit premier matériau est égal à l'indice de réfraction (N₁₂, N₃₂) dudit coeur monomode (12, 32), et l'indice de réfraction effectif de la gaine intermédiaire (13, 23, 33) est supérieur à l'indice de réfraction (N₁₂, N₃₂) du coeur monomode (12, 22, 32), du fait que l'indice de réfraction dudit deuxième matériau est supérieur à l'indice de réfraction dudit coeur monomode.

7. Fibre optique selon l'une des revendications 1 à 6, **caractérisée en ce que**, dans ledit assemblage, lesdits éléments longitudinaux de la gaine intermédiaire (13, 23, 33) sont disposées suivant un arrangement matriciel.

8. Fibre optique selon l'une des revendications 1 à 7, **caractérisée en ce que** la dimension transversale des éléments longitudinaux (13A, 23A, 33A, 33B) de la gaine intermédiaire (13, 23, 33) est supérieure à la longueur d'onde d'émission monomode de ladite fibre optique monomode (11, 21, 31) par un facteur au moins égal à 10.

9. Fibre optique selon l'une des revendications 1 à 7, **caractérisée en ce que** la dimension transversale des éléments longitudinaux (13A, 23A, 33A, 33B) de la gaine intermédiaire (13, 23, 33) est inférieure à la longueur d'onde d'émission monomode de ladite fibre optique monomode (11, 21, 31).

10. Fibre optique selon l'une des revendications 1 à 9, **caractérisée en ce que** des moyens de filtrage modal (16, 26, 36) sont disposés au niveau du coeur monomode (12, 22, 32) et/ou de la gaine intermédiaire (13, 23, 33).

11. Fibre optique selon l'une des revendications 1 à 10, **caractérisée en ce que** l'indice de réfraction effectif de la gaine intermédiaire (13, 23, 33) diffère de l'indice de réfraction du coeur monomode (12, 22,32) par au plus 10⁻⁴.

## Patentansprüche

1. Optische Faser zur Einmodenemission von Licht (11, 21, 31), vom Zentrum zum Umfang hin aufweisend:
- einen zumindest teilweise mit einer seltenen Erde dotierten Einmodenkern (12, 22, 32),
- einen optisch inaktiven Zwischenmantel (13, 23, 33),
- einen Multimoden-Pumpmantel (14, 24, 34) und
- einen Außenmantel (15, 25, 35),
**dadurch gekennzeichnet, dass** der Zwischenmantel (13, 23, 33) vollkommen fest ist und durch die Anordnung von Längsfestelementen (13A, 23A, 33A et 33B) gebildet ist und ein erstes Material aufweist, dessen Brechungsindex um höchstens 10⁻³ vom vom Brechungsindex des Einmodenkerns abweicht, und ein zweites Material, dessen Brechungsindex um mindestens 10⁻³ vom Brechungsindex des Einmodenkerns abweicht.

2. Optische Faser nach Anspruch 1, **dadurch gekennzeichnet, dass** die Anordnung Längsfestelemente (13A) aufweist mit:
- einem mittigen Längsabschnitt (13B) aus dem ersten Material und
- einem umfänglichen Längsabschnitt (13C), der den mittigen Längsabschnitt (13B) umschließt, dessen Querschnittsfläche geringer ist als die Querschnittsfläche des Letzteren und der aus dem zweiten Material besteht.

3. Optische Faser nach Anspruch 1, **dadurch gekennzeichnet, dass** die Anordnung erste Längsfestelemente (33A) aus dem ersten Material und zweite Längsfestelemente (33B) aus dem zweiten Material aufweist.

4. Optische Faser nach Anspruch 1, **dadurch gekennzeichnet, dass** die Anordnung erste Längsfestelemente (33A) aufweist, die aus dem ersten Material bestehen, und zweite Längsfestelemente (13A) mit:
- einem mittigen Längsabschnitt (13B) aus dem ersten Material und
- einem umfänglichen Längsabschnitt (13C), der den mittigen Längsabschnitt (13B) umschließt, dessen Querschnittsfläche geringer ist als die Querschnittsfläche des Letzteren und der aus dem zweiten Material besteht.

5. Optische Faser nach einem der Ansprüche 1 bis 4, **dadurch gekennzeichnet, dass** der Brechungsindex (N_{13B}, N_{33A}) des ersten Materials gleich dem Brechungsindex (N₁₂, N₃₂) des Einmodenkerns (12, 32) ist und der effektive Brechungsindex des Zwischenmantels (13, 23, 33) geringer ist als der Brechungsindex (N₁₂, N₃₂) des Einmodenkerns (12, 22, 32), da der Brechungsindex des zweiten Materials (N₁₃₆, N₃₃₈) geringer ist als der Brechungsindex (N₁₂, N₃₂) des Einmodenkerns.

6. Optische Faser nach einem der Ansprüche 1 bis 4, **dadurch gekennzeichnet, dass** der Brechungsindex (N_{13B}, N_{33A}) des ersten Materials gleich dem Brechungsindex (N₁₂, N₃₂) des Einmodenkerns (12, 32) ist und der effektive Brechungsindex des Zwischenmantels (13, 23, 33) größer ist als der Brechungsindex (N₁₂, N₃₂) des Einmodenkerns (12, 22, 32), da der Brechungsindex des zweiten Materials größer ist als der Brechungsindex des Einmodenkerns.

7. Optische Faser nach einem der Ansprüche 1 bis 6, **dadurch gekennzeichnet, dass** in der Anordnung die Längselemente des Zwischenmantel (13, 23, 33) in einem Matrixmuster angeordnet sind.

8. Optische Faser nach einem der Ansprüche 1 bis 7, **dadurch gekennzeichnet, dass** die Querabmessung der Längselemente (13A, 23A, 33A, 33B) des Zwischenmantels (13, 23, 33) um mindestens einen Faktor 10 größer ist als die Wellenlänge der Einmodenemission der optischen Einmodenfaser (11, 21, 31).

9. Optische Faser nach einem der Ansprüche 1 bis 7, **dadurch gekennzeichnet, dass** die Querabmessung der Längselemente (13A, 23A, 33A, 33B) des Zwischenmantels (13, 23, 33) kleiner ist als die Wellenlänge der Einmodenemission der optischen Einmodenfaser (11, 21, 31).

10. Optische Faser nach einem der Ansprüche 1 bis 9, **dadurch gekennzeichnet, dass** Modenfilterungsmittel (16, 26, 36) am Einmodenkern (12, 22, 32) und/oder am Zwischenmantel (13, 23, 33) angeordnet sind.

11. Optische Faser nach einem der Ansprüche 1 bis 10, **dadurch gekennzeichnet, dass** der effektive Brechungsindex des Zwischenmantel (13, 23, 33) um höchstens 10⁻⁴ vom Brechungsindex des Einmodenkerns (12, 22,32) abweicht.

## Claims

1. An optical fiber for monomode light emission (11, 21, 31) comprising, from center to periphery:
- a monomode core (12, 22, 32) doped at least partly with a rare earth,
- an optically inactive intermediate sheath (13, 23, 33),
- a multimode pumping sheath (14, 24, 34), and
- an outer sheath (15, 25, 35),
**characterized in that** the intermediate sheath (13, 23, 33) is completely solid and is formed by the assembly of longitudinal solid elements (13A, 23A, 33A and 33B), and comprises a first material with a refractive index that differs from the refractive index of said monomode core by at most 10⁻³, and a second optical material with a refractive index that differs from the refractive index of said monomode core by at least 10⁻³.

2. The optical fiber according to claim 1, **characterized in that** said assembly comprises longitudinal solid elements (13A) comprising:
- a central longitudinal portion (13B) consisting of said first material, and
- a peripheral longitudinal portion (13C) which surrounds said central longitudinal portion (13B), has a transverse cross-sectional area that is smaller than the transverse cross-sectional area thereof and consists of said second material.

3. The optical fiber according to claim 1, **characterized in that** said assembly comprises first longitudinal solid elements (33A) consisting of said first material and second longitudinal solid elements (33B) consisting of said second material.

4. The optical fiber according to claim 1, **characterized in that** said assembly comprises first longitudinal solid elements (33A) consisting of said first material and second longitudinal solid elements (13A) comprising:
- a central longitudinal portion (13B) consisting of said first material, and
- a peripheral longitudinal portion (13C) which surrounds said central longitudinal portion (13B), has a transverse cross-sectional area that is smaller than the transverse cross-sectional area thereof and consists of said second material.

5. The optical fiber according to any of claims 1 to 4, **characterized in that** the refractive index (N_{13B}, N_{33A}) of said first material is equal to the refractive index (N₁₂, N₃₂) of said monomode core (12, 32), and the effective refractive index of the intermediate sheath (13, 23, 33) is lower than the refractive index (N₁₂, N₃₂) of the monomode core (12, 22, 32), the refractive index of said second material (N₁₃₆, N₃₃₈) being lower than the refractive index (N₁₂, N₃₂) of said monomode core.

6. The optical fiber according to any of claims 1 to 4, **characterized in that** the refractive index (N_{13B,} N_{33A}) of said first material is equal to the refractive index (N₁₂, N₃₂) of said monomode core (12, 32), and the effective refractive index of the intermediate sheath (13, 23, 33) is higher than the refractive index (N₁₂, N₃₂) of the monomode core (12, 22, 32), the refractive index of said second material (N₁₃₆, N₃₃₈) being higher than the refractive index of said monomode core.

7. The optical fiber according to any of claims 1 to 6, **characterized in that**, in said assembly, said longitudinal elements of the intermediate sheath (13, 23, 33) are arranged in a matrix arrangement.

8. The optical fiber according to any of claims 1 to 7, **characterized in that** the transverse dimension of the longitudinal elements (13A, 23A, 33A, 33B) of the intermediate sheath (13, 23, 33) is greater than the monomode emission wavelength of said monomode optical fiber (11, 21, 31) by a factor of at least 10.

9. The optical fiber according to any of claims 1 to 7, **characterized in that** the transverse dimension of the longitudinal elements (13A, 23A, 33A, 33B) of the intermediate sheath (13, 23, 33) is less than the monomode emission wavelength of said monomode optical fiber (11, 21, 31).

10. The optical fiber according to any of claims 1 to 9, **characterized in that** modal filtering means (16, 26, 36) are arranged at the monomode core (12, 22, 32) and/or the intermediate sheath (13, 23, 33).

11. The optical fiber according to any of claims 1 to 10, **characterized in that** the effective refractive index of the intermediate sheath (13, 23, 33) differs from the refractive index of the monomode core (12, 22, 32) by 10⁻⁴ at most.
